# EUROPEAN PATENT APPLICATION

(11) **EP 4 582 998 A1**
(43) Date of publication of application: **09.07.2025**
(21) Application number: 23894872.3
(22) Date of filing: 03.11.2023
(51) Int. Cl.: G06K 7/14, H04M 1/02, G01P 15/00, G01J 1/02, G01S 19/14

(54) **ELECTRONIC DEVICE, METHOD, AND COMPUTER-READABLE STORAGE MEDIUM FOR IDENTIFYING VISUAL OBJECTS CORRESPONDING TO CODE INFORMATION USING PLURALITY OF CAMERAS**

(30) Priority: 21.11.2022 KR 20220156652; 09.12.2022 KR 20220171613
(71) Applicant: Samsung Electronics Co., Ltd., Suwon-si, Gyeonggi-do 16677 (KR)
(72) Inventor: LIM, Kwangyong, Suwon-si Gyeonggi-do 16677 (KR)
(74) Representative: Gulde & Partner
(86) International application number: PCT/KR2023/017594
(87) International publication number: WO 2024/111943

(57) **Abstract**

An electronic device, according to one embodiment, may comprise a plurality of cameras, including a first camera and a second camera facing in the same direction as the first camera, a display, a processor, and a memory including instructions which, when executed by the processor, cause the electronic device to display on the display a preview image on the basis of first image frames acquired using the first camera of the plurality of cameras. The electronic device may comprise a memory including instructions which, when executed by the processor, cause the electronic device to acquire second image frames using the second camera while displaying the preview image on the basis of the first image frames acquired using the first camera of the plurality of cameras, based at least in part on a determination that a portion of the first image frames comprises an object to be recognized.

## Description

### [Technical Field]

The disclosure relates to an electronic device, a method, and a computer-readable storage medium for identifying a visual object corresponding to code information using a plurality of cameras.

### [Background Art]

With development of image recognition technology, electronic devices are being developed that recognize an external object from image data obtained using a camera or the like and provide a user with various information related to the recognized external object. An electronic device may recognize a barcode or QR code using a camera and provide information stored in the recognized barcode or QR code to a user. The barcode may refer to a code based on a 1-dimensional form processible by the electronic device. The QR code may refer to a code based on a 2-dimensional matrix form processible by the electronic device.

### [Disclosure]

### [Technical Solution]

According to an example embodiment, an electronic device may comprise: an image sensor, a distance sensor, a display, and a processor. The processor may be configured to control the display to display a preview image based on at least a portion of first frames received from the image sensor. The processor may be configured to obtain second frames by enlarging the first frames using magnification information selected based on data of the distance sensor, in a state in which the preview image is displayed based on the first frames. The processor may be configured to execute a function indicated by a visual object on the preview image, based on identifying the visual object corresponding to a code from at least one of the second frames.

According to an example embodiment, a method of operating an electronic device may comprise controlling to display a preview image based on at least a portion of first frames received from an image sensor. The method may comprise obtaining second frames by enlarging the first frames using magnification information selected based on data of a distance sensor, in a state in which the preview image is displayed based on the first frames. The method may comprise executing a function indicated by a visual object on the preview image, based on identifying the visual object corresponding to a code from at least one of the second frames.

According to an example embodiment, a non-transitory computer readable storage medium storing one or more programs, the one or more programs, which, when executed by a processor of an electronic device, may cause the electronic device to perform operations comprising: controlling to a preview image based on at least a portion of first frames received from an image sensor; obtaining second frames by enlarging the first frames using magnification information selected based on data of a distance sensor, in a state in which the preview image is displayed based on the first frames; and execute a function indicated by a visual object on the preview image, based on identifying the visual object corresponding to a code from at least one of the second frames.

As described above, according to an embodiment, an electronic device may comprise a plurality of cameras including a first camera and a second camera facing in a same direction as the first camera, a display, a processor, and memory for storing instructions that, when executed by the processor, cause the electronic device to display, on the display, a preview image, based on first image frames obtained using the first camera from among the plurality of cameras. The electronic device may comprise memory for storing instructions that, when executed by the processor, cause the electronic device to, while displaying the preview image based on the first image frames obtained using the first camera from among the plurality of cameras, obtain second image frames using the second camera, based at least in part on determining that a portion of the first image frames includes an object to be recognized. The electronic device may comprise memory for storing instructions that, when executed by the processor, cause the electronic device to execute a recognition function based on the second image frames obtained using the second camera while displaying the preview image on the display, based at least in part on determining that a portion of the first image frames includes an object to be recognized.

According to an embodiment, a method of an electronic device including a plurality of cameras including a first camera and a second camera facing in a same direction as the first camera, and a display may comprise displaying, on the display, a preview image, based on first image frames obtained using the first camera from among the plurality of cameras. The method may comprise, while displaying the preview image based on the first image frames obtained using the first camera from among the plurality of cameras, obtaining second image frames using the second camera, based at least in part on determining that a portion of the first image frames includes an object to be recognized. The method may comprise, based at least in part on determining that a portion of the first image frames includes an object to be recognized, executing a recognition function based on second image frames obtained using the second camera while displaying the preview image on the display.

According to an embodiment, an electronic device may comprise a plurality of cameras including a first camera and a second camera facing in a same direction as the first camera, a sensor facing in a same direction as the first camera and the second camera, a display, a processor. The electronic device may comprise memory for storing instructions that, when executed by the processor, cause the electronic device to display, on the display, a preview image, based on first image frames obtained using the first camera from among the plurality of cameras. The electronic device may comprise memory for storing instructions that, when executed by the processor, cause the electronic device to obtain, by using the sensor, information regarding a distance from an external object viewed in the preview image being displayed on the display. The electronic device may comprise memory for storing instructions that, when executed by the processor, cause the electronic device to obtain second image frames using the second camera, based at least in part on the distance, while maintaining displaying the preview image based on first image frames obtained using the first camera from among the plurality of cameras. The electronic device may comprise memory for storing instructions that, when executed by the processor, cause the electronic device to execute a recognition of quick response (QR) code based on the second image frames while displaying the preview image on the display.

### [Description of the Drawings]

The above and other aspects, features and advantages of certain embodiments of the present disclosure will be more apparent from the following detailed description, taken in conjunction with the accompanying drawings, in which:
FIG. 1 is a block diagram of an electronic device in a network environment, according to various embodiments.
FIG. 2 is a block diagram illustrating an example configuration of an electronic device, according to an embodiment;
FIGS. 3A and 3B are diagrams illustrating an example state in which an electronic device obtains one or more frames based on a view angle of each of one or more cameras using the one or more cameras, according to an embodiment;
FIG. 4 is a table illustrating an example relationship of magnification according to a distance information, according to an embodiment;
FIG. 5 is a diagram illustrating an example operation in which an electronic device removes a frame based on identifying a specified motion, according to an embodiment.
FIG. 6 is a diagram illustrating an example operation in which an electronic device identifies a visual object indicating a code, according to an embodiment; and
FIG. 7 is a flowchart illustrating an example operation of an electronic device, according to an embodiment.
FIG. 8 is a diagram illustrating an exemplary flowchart indicating an operation of an electronic device according to an embodiment.
FIG. 9 is a diagram illustrating an example of an operation of identifying text by an electronic device according to an embodiment.
FIG. 10 is a diagram illustrating an exemplary flowchart indicating an operation of an electronic device according to an embodiment.

### [Mode for Invention]

Hereinafter, various example embodiments of the present disclosure will be described in greater detail with reference to the accompanying drawings.

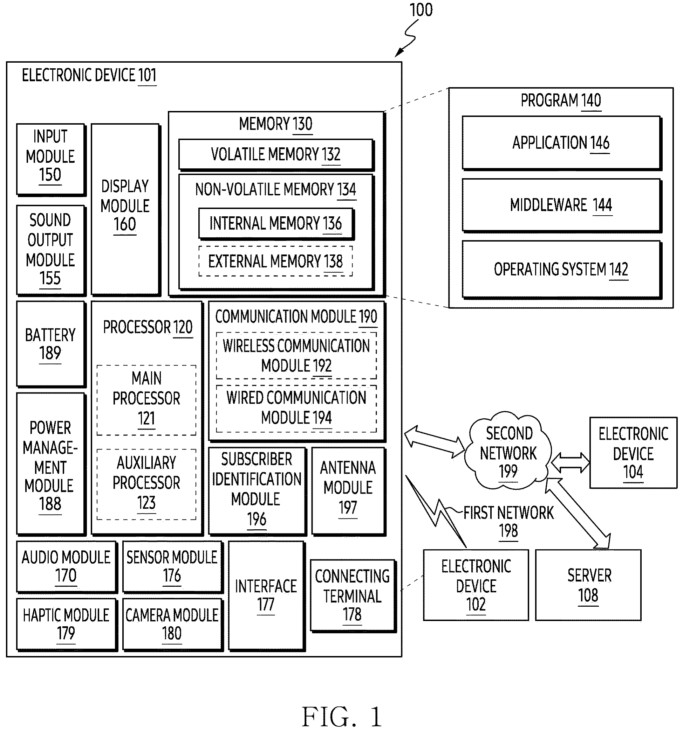

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In various embodiments, at least one of the components (e.g., the connecting terminal 178) may be omitted from the electronic device 101, or one or more other components may be added in the electronic device 101. In various embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adj acent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, a home appliance, or the like. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), the element may be coupled with the other element directly (e.g., wiredly), wirelessly, or via a third element.

As used in connection with various embodiments of the disclosure, the term "module" may include a unit implemented in hardware, software, or firmware, or any combination thereof, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

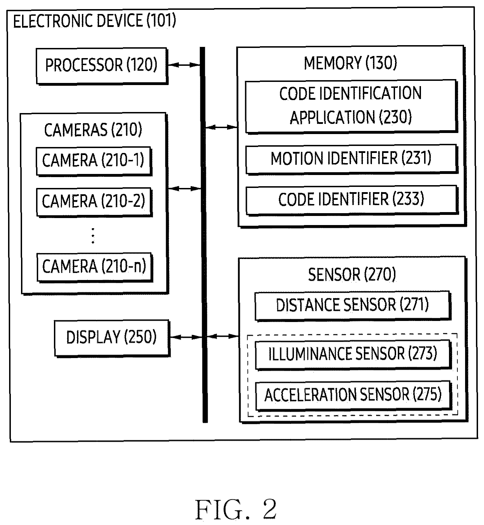

FIG. 2 is a block diagram illustrating an example configuration of an electronic device, according to an embodiment. The electronic device 101 of FIG. 2 may be an example of the electronic device 101 of FIG. 1. Referring to FIG. 2, according to an embodiment, the electronic device 101 may include at least one of a processor (e.g., including processing circuitry) 120, a memory 130, a camera 210, a display 250, and/or a sensor 270. The processor 120, the memory 130, the camera 210, the display 250, and the sensor 270 may be electronically and/or operably coupled with each other by an electronical component such as a communication bus. Hereinafter, the operative coupling of hardware components may refer, for example, to a direct or indirect connection between hardware components being established by wire or wirelessly, so that a second hardware is controlled by a first hardware among the hardware components. Although illustrated based on different blocks, embodiments are not limited thereto, and a portion of the hardware of FIG. 2 (e.g., at least a portion of the processor 120, the memory 130, and the communication circuit (not shown)) may be included in a single integrated circuit such as a system on a chip (SoC). The types and/or numbers of hardware components included in the electronic device 101 are not limited to those illustrated in FIG. 2. For example, the electronic device 101 may include only a portion of the hardware components illustrated in FIG. 2.

According to an embodiment, the processor 120 of the electronic device 101 may include a hardware component for processing data based on one or more instructions. For example, the hardware component for processing data may include an arithmetical and logical unit (ALU), a floating point unit (FPU), a field programmable gate array (FPGA), and/or a central processing unit (CPU). The number of processors 120 may be one or more. For example, the processor 120 may have a structure of a multi-core processor such as a dual core, a quad core, or a hexa core. The processor 120 of FIG. 2 may include the processor 120 of FIG. 1.

According to an embodiment, the memory 130 of the electronic device 101 may include a hardware component for storing data and/or an instruction inputted to and/or outputted from the processor 120. The memory 130 may include a volatile memory such as a random-access memory (RAM) and/or a non-volatile memory such as a read-only memory (ROM). For example, the volatile memory may include at least one of a dynamic RAM (DRAM), a static RAM (SRAM), a Cache RAM, and a pseudo SRAM (PSRAM). For example, the non-volatile memory may include at least one of a programmable ROM (PROM), an erasable PROM (EPROM), an electrically erasable PROM (EEPROM), a flash memory, a hard disk, a compact disk, and an embedded multimedia card (eMMC). The memory 130 of FIG. 2 may include the memory 130 of FIG. 1.

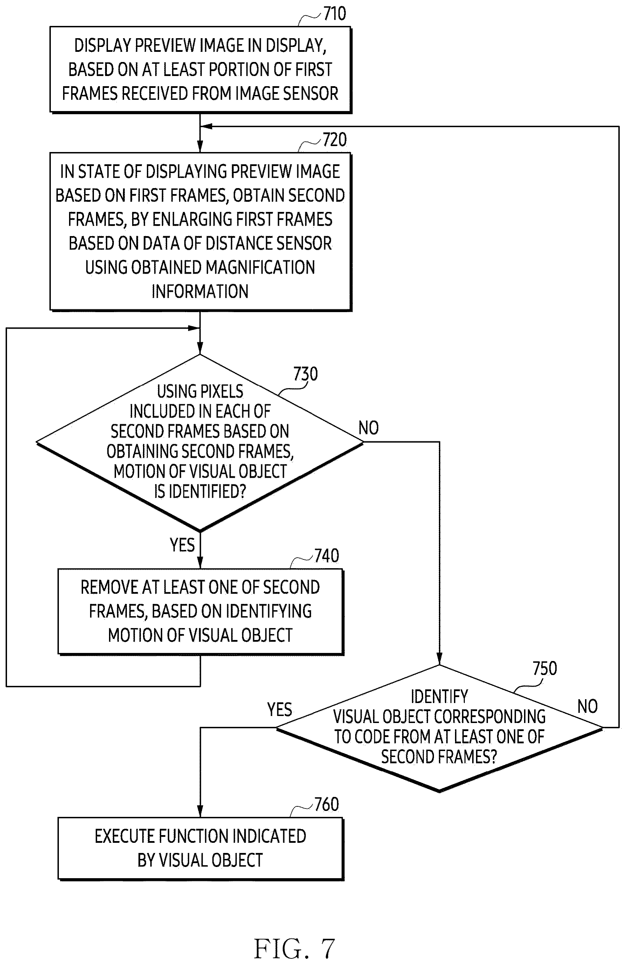

According to an embodiment, one or more instructions indicating calculation and/or operation to be performed on data by the processor 120 may be stored in the memory 130 of the electronic device 101. A set of one or more instructions may, for example, be referred to as a firmware, an operating system, a process, a routine, a sub-routine, and/or an application. For example, when a set of a plurality of instructions distributed in the form of operating system, firmware, driver, and/or application is executed, the electronic device 101 and/or the processor 120 may perform at least one of operations of FIG. 7. Hereinafter, that an application is installed in the electronic device 101 may refer, for example, to one or more instructions being provided in the form of an application are stored in the memory 130 of the electronic device 101, and that the one or more applications are stored in a format (e.g., a file with an extension specified by the operating system of the electronic device 101) executable by the processor 120 of the electronic device 101.

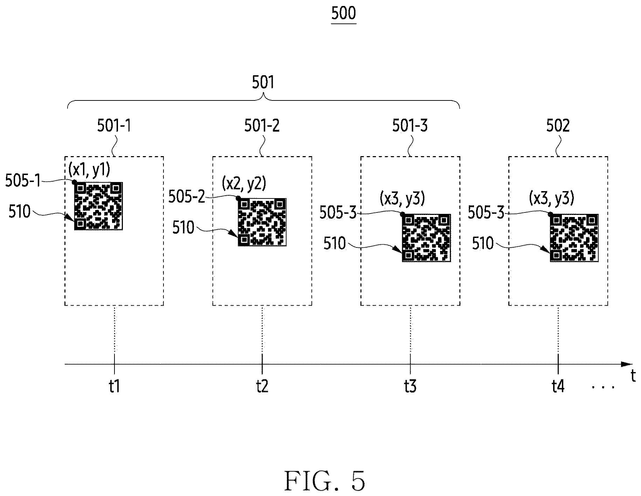

Referring to FIG. 2, one or more instructions included in a code identification application 230 may cause execution of a motion identifier 231 and/or a code identifier 233. According to an embodiment, in a state in which the code identification application 230 is executed, the electronic device 101 may obtain frames including at least one external object (e.g., an external object indicating a code) using cameras 210. For example, the electronic device 101 may identify motion of the at least one external object using pixels included in each of the frames based on execution of the motion identifier 231. For example, the electronic device 101 may identify motion of the at least one external object based on identifying motion blur and/or optical flow included in each of the frames. An example of an operation in which the electronic device 101 identify motion of the at least one external object using the frames will be described in greater detail below with reference to FIG. 5.

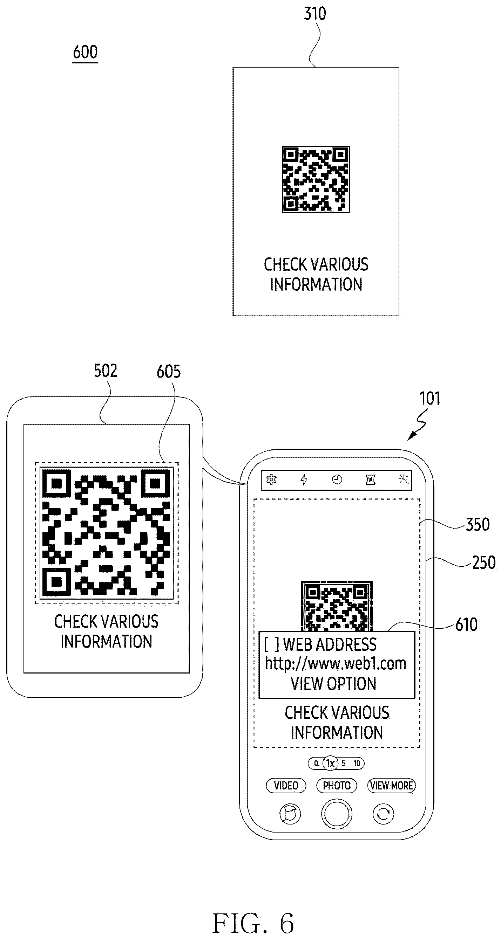

For example, the electronic device 101 may identify a visual object indicating a code (or pattern information) included in each of the frames based on execution of the code identifier 233. For example, the electronic device 101 may execute a function indicated by the visual object based on identifying a visual object indicating a code from at least one of the frames. An example of an operation in which the electronic device 101 identifies the visual object from at least one of the frames will be described in greater detail below with reference to FIG. 6.

According to an embodiment, the camera(s) 210 of the wearable device 101 may include, for example, and without limitation, one or more light (or image) sensors (e.g., a charged coupled device (CCD) sensor, a complementary metal oxide semiconductor (CMOS) sensor) that generate an electronic signal indicating a color and/or brightness of light. A plurality of optical sensors included in the cameras 210 may be disposed in the form of a 2-dimensional array. The cameras 210 may generate an image including a plurality of pixels arranged in 2-dimensions and corresponding to light reaching light sensors of a 2-dimensional array, by obtaining electronic signals of each of the plurality of optical sensors substantially simultaneously. For example, photo data captured using the cameras 210 may refer to one image obtained from the cameras 210. For example, video data captured using the cameras 210 may refer to a sequence of a plurality of images obtained from the cameras 210 according to a specified frame rate. According to an embodiment, the electronic device 101 may be positioned in a direction in which the cameras 210 receive light, and may further include a flashlight for outputting light in the direction. The cameras 210 may include the camera module 180 of FIG. 1.

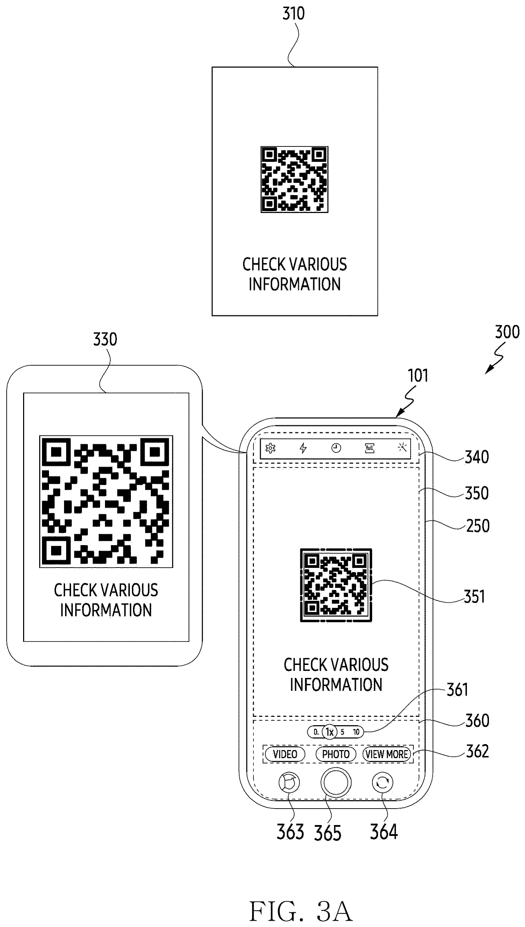

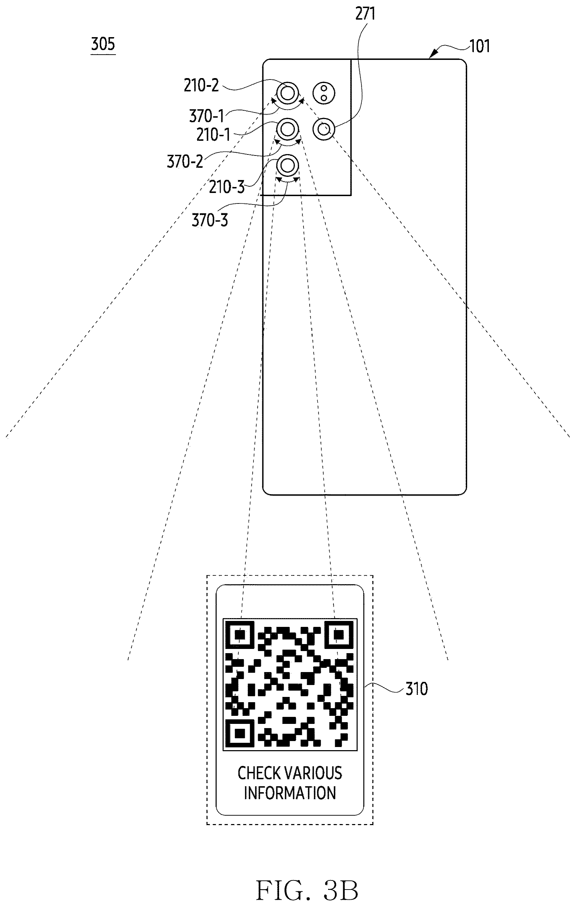

According to an embodiment, the number of the cameras 210 included in the electronic device 101 may be one or more. Referring to FIG. 2, the electronic device 101 may include n cameras 210-1, 210-2, ..., and 210-n. The n cameras 210-1, 210-2, ..., and 210-n may have an independent direction and/or a field-of-view (FoV) within the electronic device 101. The FoV is an area formed based on a view angle of the lens of the cameras 210 capable of receiving light, and may correspond to an area corresponding to an image (or frame) generated by the cameras 210. According to an embodiment, the electronic device 101 may obtain at least two images (or frames) from at least two cameras by substantially simultaneously controlling the at least two cameras having FoVs at least partially overlapping each other, among the n cameras 210-1, 210-2, ..., and 210-n. An embodiment in which the n cameras 210-1, 210-2, ..., and 210-n are disposed in the electronic device 101 will be described in greater detail below with reference to FIGS. 3A and 3B.

According to an embodiment, the display 250 of the electronic device 101 may output visualized information to a user. For example, the display 250 may output visualized information to the user, by being controlled by the processor 120 and/or a graphic processing unit (GPU, not shown). The display 250 may include, for example, and without limitation, a flat panel display (FPD) and/or an electronic paper. The FPD may include a liquid crystal display (LCD), a plasma display panel (PDP), a digital mirror device (DMD), one or more light emitting diodes (LEDs), and/or a micro LED. The LED may include an organic LED (OLED). The display 250 of FIG. 2 may include the display module 160 of FIG. 1.

According to an embodiment, the sensor 270 of the electronic device 101 may generate electronic information that may be processed by the processor 110 and/or the memory 130 from non-electronic information related to the electronic device 101. The electronic information generated by the sensor 270 may be stored in the memory 130, processed by the processor 110, or transmitted to another electronic device distinct from the electronic device 101. For example, the sensor 270 may include a Global Positioning System (GPS) sensor for detecting a geographic location of the electronic device 101, a distance sensor 271 measuring a distance to at least one external object, an illuminance sensor 273 measuring brightness of ambient light and/or an acceleration sensor 275 for identifying motion of the electronic device 101. The sensor 270 may include the sensor module 176 of FIG. 1.

According to an embodiment, the sensor 270 of the electronic device 101 may include the distance sensor 271 for measuring a distance between the electronic device 101 and an external object distinct from the electronic device 101. For example, the external object may include a subject (or an external object corresponding to a code) included in an image obtained from the cameras 210, by being included in the FOV of the cameras 210. According to an embodiment, the distance sensor 271 of the electronic device 101 may correspond to a laser sensor for measuring a distance between the electronic device 101 and a subject based on laser light. The distance measured by the laser sensor may be used for focus adjustment (e.g., auto focus) by the cameras 210. According to an embodiment, the distance sensor 271 of the electronic device 101 may correspond to a time-of-flight (ToF) sensor generating a depth image including depth values arranged in 2-dimensions. The ToF sensor may include an infrared diode and a plurality of infrared light sensors that detect intensity of infrared light and are arranged in a 2-dimensional array. The electronic device 101 may obtain the depth image, based on a time when light emitted from the infrared diode is reflected from a subject and reaches at least one of the plurality of infrared light sensors, using the ToF sensor.

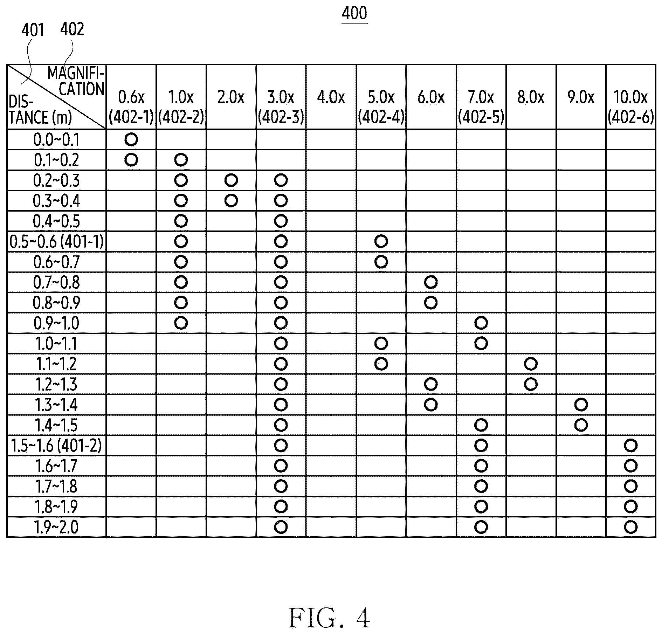

According to an embodiment, the electronic device 101 may process one or more frames obtained from one or more cameras controlled at the same time, using a distance between a subject and the electronic device 101 measured by the distance sensor 271. For example, the electronic device 101 may obtain one or more parameters (e.g., a parameter indicating magnification) for adjusting at least one of a distinguished FoVs of one or more frames, based on the distance measured by the distance sensor 271. For example, the distance sensor 271 may be included in the sensor module 176 of FIG. 1 and/or the camera module 180 of FIG. 1. According to an embodiment, an example in which the electronic device 101 processes the one or more frames based on the distance measured by the distance sensor 271 will be described in greater detail below with reference to FIG. 4.

According to an embodiment, the sensor 270 of the electronic device 101 may include an illuminance sensor 273 for measuring the brightness surrounding environment. The electronic device 101 may identify the surrounding environment of the electronic device 101 from data of the illuminance sensor 273. For example, the illuminance sensor 273 may output an electronic signal indicating the intensity (or amount of light) of light reaching at least a portion of the illuminance sensor 273 exposed to the outside. For example, the illuminance sensor 273 may output sensor data indicating the brightness of ambient light of the electronic device 101. The illuminance sensor 273 may include an element having a photoelectric effect in which conductivity is changed by generated electrons when the ambient light is received. The illuminance sensor 273 may be an example of a CdS sensor using cadmium sulfide as an element.

According to an embodiment, the sensor 270 of the electronic device 101 may include an acceleration sensor 275 for measuring a physical motion of the electronic device 101. The acceleration sensor 275 may output electronic information indicating the magnitude of gravity acceleration measured in each of a plurality of specified axes (e.g., x-axis, y-axis, and z-axis) perpendicular to each other. According to an embodiment, the electronic device 101 may measure a posture or motion of the electronic device 101 in a physical space based on electronic information outputted from the acceleration sensor 275. The posture measured by the electronic device 101 may indicate the orientation of the electronic device 101 and/or a form of the electronic device 101 measured by the acceleration sensor 275. For example, the form of the electronic device 101 may be measured by a hall sensor. When the motion of the electronic device 101 measured by the acceleration sensor 275 is identified, the electronic device 101 may temporarily cease obtaining at least one image among images obtained using the cameras 210. An operation in which the electronic device 101 temporarily ceases obtaining the at least one image based on identifying the motion will be described in greater detail below with reference to FIG. 5.

As described above, according to an embodiment, the electronic device 101 may simultaneously obtain a plurality of images including a subject in common, by simultaneously controlling a plurality of cameras 210 having each FoV. The electronic device 101 may display a preview image in the display 250 using at least a portion of the plurality of images. In a state of displaying the preview image, the electronic device 101 may obtain distance information between the electronic device 101 and at least one external object included in each of the plurality of images using the distance sensor 271. The electronic device 101 may change the plurality of images using magnification information selected based on the distance information. The electronic device 101 may identify a visual object corresponding to a code, using the plurality of changed images, from at least one of a plurality of changed images. The electronic device 101 may provide user convenience by identifying a visual object corresponding to the code using at least one image distinct from a preview image among a plurality of images, independently of receiving a user input indicating adjustment of a preview image from a user to identify a visual object corresponding to the code.

FIGS. 3A and 3B are diagrams illustrating example states in which an electronic device obtains one or more frames based on a view angle of each of one or more cameras using the one or more cameras, according to . The electronic devices 101 of FIGS. 3A to 3B may, for example, include the electronic devices 101 of FIGS. 1 to 2.

Referring to FIG. 3A, an example of a state 300 in which the electronic device 101 displays a screen in the display 250 is illustrated. For example, the screen may include a user interface (UI) displayed in at least a portion of the display. For example, the screen may include activity of operating system (e.g., Android operating system) of the electronic device 101. The screen may be displayed by the electronic device 101 executing an application (e.g., a camera application) stored in a memory (e.g., the memory 120 of FIG. 1).

According to an embodiment, the electronic device 101 may display a preview image 350 provided from a camera (e.g., the camera 210-1 of FIG. 2) on the screen. When the electronic device 101 includes a plurality of cameras (e.g., the cameras 210 in FIG. 2), the electronic device 101 may display the preview image 350, based on at least a portion of a plurality of images obtained through at least one camera of a plurality of cameras. For example, resolution and/or dimension of the preview image 350 may be less than resolution and/or dimension of each of the plurality of images.

According to an embodiment, the electronic device 101 may display visual objects for performing different functions related to the camera included in the electronic device 101 while displaying the preview image 350.

According to an embodiment, in a portion 340, the electronic device 101 may display text and/or icon for controlling one or more parameters related to a type of media content (e.g., photo or video) included in a portion 360 different from the portion 340. For example, in a state for obtaining the preview image 350 (e.g., a state for obtaining media content corresponding to a picture), in the portion 340, the electronic device 101 may include an icon for displaying a screen to control a camera (e.g., the cameras 210 in FIG. 2), an icon for controlling a flashlight, an icon for setting a specified time to obtain the preview image 350, an icon for controlling ratio of the preview image 350, and/or an icon for adjusting a color (or filter) included in the preview image 350.

According to an embodiment, the electronic device 101 may display a menu indicating a type of media content to be obtained using a camera based on text and/or an icon, in the portion 360 distinct from the portion 340 of the screen. For example, the electronic device 101 may display an icon 361 indicating magnification of the preview image 350 in a portion 360. The electronic device 101 may change the preview image 350, using frames obtained using at least one of the cameras (e.g., the cameras 210 in FIG. 2), in response to an input indicating a selection of the icon 361. For example, the electronic device 101 display at least a portion of an image using the camera corresponding to the magnification, by controlling the display 250, in response to an input indicating a change in the magnification of the preview image 350.

For example, the electronic device 101 is media content obtainable using a camera, and may display text indicating each photo and/or video on a portion 362. For example, the electronic device 101 may enter a state for recording frames including the preview image 350 during a specified time, in response to identifying a user input that touches and/or clicks on text corresponding to a video in the portion 362.

For example, the electronic device 101 may display a thumbnail corresponding to media content stored in the electronic device 101 (e.g., latest media content photographed using the camera of the electronic device 101) in a portion 363.

For example, the electronic device 101 may obtain at least one image using another camera based on another direction different from a direction of camera used to obtain the preview image 350, in the portion 360, in response to an input with respect to an icon 364 indicating switching the camera. The electronic device 101 may display the at least one image on at least a portion of the display 250 by replacing the preview image 350, in response to the input with respect to the icon 364.

For example, the electronic device 101 may display an icon 365 indicating a photographing button for obtaining the preview image 350 in the portion 360. In response to an input indicating a selection of the icon 365, the electronic device 101 may obtain at least one image corresponding to the preview image 350. For example, in a state for recording a video, the electronic device 101 may record a plurality of frames including the preview image 350 during a specified time, in response to the input indicating the selection of the icon 365. For example, the electronic device 101 may at least temporarily cease obtaining frames 330, in response to an input (e.g., an input for obtaining the preview image 350) indicating the selection of the icon 365. For example, in a state for recording a video, the electronic device 101 may at least temporarily cease obtaining the frames 330 while recording the video, in response to the input indicating the selection of the icon 365.

According to an embodiment, in a state in which the preview image 350 is displayed using at least one camera (e.g., the cameras 210-1 in FIG. 2) among cameras (e.g., the cameras 210 in FIG. 2), the electronic device 101 may obtain the frames 330 using another camera (e.g., camera 210-2 in FIG. 2, camera 210-n in FIG. 2) different from the at least one camera among the cameras. For example, the electronic device 101 may obtain the frames 330 using the other camera in a background state. For example, the frames 330 may be used by the electronic device 101 to identify an external object.

According to an embodiment, in a state of displaying the preview image 350, the electronic device 101 may obtain information on a distance between an external object 310 and the electronic device 101 using the distance sensor 271 of FIG. 2. For example, the electronic device 101 may obtain distance information corresponding to an area 351 in the preview image 350. The electronic device 101 may obtain a parameter indicating magnification corresponding to the distance information. An operation in which the electronic device 101 obtains a parameter indicating magnification corresponding to distance information will be described in greater detail below with reference to FIG. 4.

According to an embodiment, the electronic device 101 may identify a camera corresponding to the magnification, based on obtaining a parameter indicating magnification. The camera (e.g., the cameras 210 in FIG. 2) may be an example of a camera set to obtain an image based on a specified magnification. The electronic device 101 may obtain the frames 330 using the identified camera. For example, when a camera corresponding to the magnification is not identified, the electronic device 101 may obtain other frames by enlarging the frames. An operation in which the electronic device 101 obtains other frames by enlarging the frames 330 will be described in greater detail below with reference to FIG. 4.

According to an embodiment, the electronic device 101 may identify the external object 310 using a camera (e.g., the cameras 210 in FIG. 2). For example, the external object 310 may include at least one code information. The at least one code information may include a code (e.g., bar code) based on 1-dimension and/or a code (e.g., quick response (QR) code) based on 2-dimension. For example, the at least one code information may include code information identifiable by the electronic device 101. The at least one code information may include pattern information having a specified pattern. The at least one code information may include a symbol for indicating information. However, it is not limited thereto.

An operation in which the electronic device 101 identifies code information included in the external object 310 using a camera will be described in greater detail below with reference to FIG. 6.

Referring to FIG. 3B, a state 305 in which the electronic device 101 is disposed toward the external object 310 is illustrated. According to an embodiment, in the electronic device 101, lenses included in each of cameras 210-1, 210-2, and 210-3 may be exposed to the outside through a second surface distinct from a first surface exposed to the outside. According to an embodiment, the distance sensor 271 included in the electronic device 101 may be exposed to the outside through the second surface.

According to an embodiment, the cameras 210-1, 210-2, and 210-3 included in the electronic device 101 may have FoVs distinct from each other. The distance sensor 271 may obtain a distance between the external object 310 and the electronic device 101 included in at least a portion of the FoVs.

Referring to FIG. 3B, angles of view 370-1, 370-2, and 370-3 related to each of the FoVs of the cameras 210-1, 210-2, and 210-3 are illustrated. For example, the camera 210-1 is a camera generating a plurality of frames for obtaining a preview image (e.g., the preview image 350 of FIG. 3A), and may have the angle of view 370-2 corresponding to a specified angle. For example, the camera 210-2 may have the angle of view 370-1 corresponding to an angle greater than the specified angle. For example, when the camera 210-1 is referred to as a wide-angle camera, the camera 210-2 may be referred to as an ultra-wide-angle camera. For example, the camera 210-3 may have the angle of view 370-3 corresponding to an angle less than the specified angle. For example, the camera 210-3 may be referred to as a telephoto camera for photographing a subject relatively far from the electronic device 101. For example, when an image obtained using the camera 210-1 based on the angle of view 370-2 is referred to as a first magnification (e.g., 1.0x), an image obtained using the camera 210-2 based on the angle of view 370-2 may be referred to a second magnification (e.g., 0.6x). For example, an image obtained using the camera 210-3 based on the angle of view 370-3 may be referred to a third magnification (e.g., 3.0x). However, the type and the number of cameras 210-1, 210-2, and 210-3 exposed to the outside through the second surface of the electronic device 101 are not limited to the example illustrated in FIG. 3B.

According to an embodiment, in the electronic device 101, at least a portion of the angles of view 370-1, 370-2, and 370-3 of each of the cameras 210-1, 210-2, and 210-3 may overlap each other. The electronic device 101 may obtain a plurality of frames including an external object 310, using each of the cameras 210-1, 210-2, and 210-3. The electronic device 101 may identify at least a portion among the plurality of frames using magnification information corresponding to distance information. In order to identify the at least a portion, the electronic device 101 may select at least two cameras (e.g., cameras 210-1 and 210-3) among the cameras 210-1, 210-2, and 210-3. An operation in which the electronic device 101 selects at least two cameras may be performed based on mapping data to be described in greater detail below with reference to FIG. 4. For example, selecting the at least two cameras may selected, based on at least one of distance information between the electronic device 101 and the external object 310, brightness information around the electronic device 101, and/or angles of view 370-1, 370-2, and 370-3 of cameras 210-1, 210-2, and 210-3. The embodiment is not limited thereto, and the electronic device 101 may obtain two images in the state 305 by simultaneously controlling at least two cameras (e.g., cameras 210-1 and 210-2), in order to identify a visual object corresponding to code information.

As described above, according to an embodiment, the electronic device 101 may select at least two cameras (e.g., cameras 210-1 and 210-2) having FoVs overlapping each other to identify a visual object indicating code information, as a camera to obtain at least two frames in which FoV and/or magnifications required to identify the visual object is different. The electronic device 101, by simultaneously controlling at least two selected cameras, may display a preview image using a camera of the two cameras and identify a visual object indicating the code information using another camera of the two cameras.

FIG. 4 is a table illustrating an example relationship of magnification according to a distance information, according to an embodiment. The electronic device 101 of FIG. 4 may include the electronic device 101 of FIGS. 1 to 3B. Referring to FIG. 4, according to an embodiment, a table 400 illustrating an example relationship of magnification according to a distance is illustrated.

Referring to FIG. 4, according to an embodiment, distance information 401 may indicate a distance between the electronic device 101and the external object 310 of FIG. 3A, obtained by the electronic device 101 using a distance sensor (e.g., the distance sensor 271 in FIG. 2). For example, the distance information 401 may include a specified range (e.g., greater than or equal to 0 m and less than 0.1 m). According to an embodiment, magnification information 402 may be set based on FoV corresponding to an image obtained using a camera (e.g., cameras 210 in FIG. 2). For example, the magnification information 402 may be set based on an angle of view (e.g., the angles of view 370-1, 370-2, and 370-3 of FIG. 3B) of each of cameras (e.g., the cameras 210 of FIG. 2).

According to an embodiment, when the electronic device 101 includes a plurality of cameras (e.g., the cameras 210 of FIG. 2), a magnification corresponding to each of the plurality of cameras may be set. For example, when a frame obtained using a camera (e.g., the camera 210-1 in FIG. 2) of the electronic device 101 is set to a magnification value 402-2 (e.g., 1.0x), a frame obtained using a camera (e.g., the camera 210-2 of FIG. 2) may be set to a magnification value 402-1 (e.g., 0.6x). However, it is not limited thereto. According to an embodiment, the electronic device 101 may include a portion of a plurality of cameras corresponding to at least one value included in the magnification information 402.

According to an embodiment, when a distance value 401-1 (e.g., greater than or equal to 0.5 m and less than 0.6 m) with an external object (e.g., the external object 310 of FIG. 3A) is obtained, the electronic device may obtain magnification information 402 corresponding to the distance information. The magnification information may include a magnification value 402-2 (e.g., 1.0x), a magnification value 402-3 (e.g., 3.0x), and a magnification value 402-4 (e.g., 5.0x). The electronic device 101 may identify a camera corresponding to each of the magnifications 402-2, 402-3, and 402-4. For example, the electronic device 101 may identify a camera (e.g., the camera 210-1 of FIG. 2) corresponding to the magnification value 402-2. The electronic device 101 may identify a camera (e.g., the camera 210-3 of FIG. 3B) corresponding to the magnification value 402-3.

For example, when a camera corresponding to the magnification value 402-4 is not identified, the electronic device 101 may change an image obtained using a camera corresponding to the magnification value 402-3 (e.g., the camera 210-3 of FIG. 3B) to obtain an image based on the magnification value 402-4. For example, the electronic device 101 may obtain an image based on the magnification value 402-4, using an image based on the magnification value 402-3 that is relatively close to the magnification value 402-4 among the magnification values 402-2 and 402-3.

For example, the electronic device 101 may obtain an image based on the magnification value 402-4, by enlarging a specified area (e.g., the area 351 in FIG. 3A) in an image obtained using a camera (e.g., the camera 210-3 of FIG. 3B) corresponding to the magnification value 402-3. For example, the electronic device 101 may obtain the image based on the magnification value 402-4, based on cropping the specified area. For example, the image based on the magnification value 402-4 may be referred to the frames 330 of FIG. 3A.

According to an embodiment, obtaining an image based on the magnification value 402-4 by enlarging a specified area of an image based on the magnification value 402-3 may be performed based on the electronic device 101 performing digital zoom using an optical sensor (e.g., a charged coupled device (CCD) sensor, a complementary metal oxide semiconductor (CMOS) sensor) included in a camera (e.g., the cameras 210 of FIG. 2). For example, the FoV of the image based on the magnification value 402-3 and the FoV of the image based on the magnification value 402-4 may be different. For example, the FoV of the image based on the magnification value 402-4 may be relatively smaller than the FoV based on the magnification value 402-3, by obtaining an image based on the magnification value 402-4 by enlarging the image based on the magnification value 402-3. However, it is not limited to the above-described embodiments.

According to an embodiment, the electronic device 101 may identify a magnification value corresponding to a distance value 401-2 when obtaining a distance value 401-2 (e.g., greater than or equal to 1.5m and less than 1.6m) from an external object (e.g., the external object 310 of FIG. 3). The magnification value may include the magnification value 402-3 (e.g., 3.0x), a magnification value 402-5 (e.g., 7.0x), and a magnification value 402-6 (e.g., 10.0x).

For example, the electronic device 101 may include a camera corresponding to the magnification value 402-1 (e.g., the camera 210-2 of FIG. 2), a camera corresponding to the magnification value 402-2 (e.g., the camera 210-1 of FIG. 2), and a camera corresponding to the magnification value 402-6 (e.g., the camera 210-3 of FIG. 3B). In a state in which the electronic device 101 includes the cameras, the electronic device 101 may enlarge a specified area of an image obtained using a camera corresponding to the magnification value 402-2 based on performing digital zoom, in order to obtain an image based on the magnification value 402-3. For example, in a state of including the cameras, the electronic device 101 may enlarge a specified area of an image obtained using a camera corresponding to the magnification value 402-2 by performing digital zoom, in order to obtain an image corresponding to the magnification value 402-5. For example, while displaying a preview image using at least one of the cameras, the electronic device 101 may obtain an image corresponding to each of magnifications 402-4 and 402-5 in a background state. However, it is not limited thereto.

According to an embodiment, the electronic device 101 may identify FoV of each of a plurality of cameras included in the electronic device 101. The electronic device 101 may map a distance range for using each of the plurality of cameras, based on identification of the FoV of each of the plurality of cameras. For example, the electronic device 101 may include a first camera corresponding to the magnification value 402-2, a second camera corresponding to the magnification value 402-4, and/or a third camera corresponding to the magnification value 402-5. While displaying a preview image using at least one camera among the first camera, the second camera, and/or the third camera, the electronic device 101 may identify a distance value to a subject included in the preview image through the distance sensor. When a distance value included in a first distance range (e.g., 0.0 to 1,0) is identified, the electronic device 101 may identify the subject using an image obtained using the first camera. When a distance value included in a second distance range (e.g., 1.0 to 1,4) is identified, the electronic device 101 may use an image obtained using the second camera to identify the subject. When a distance value included in a second distance range (e.g., 1.4 to 2.0) is identified, the electronic device 101 may use an image obtained using the third camera to identify the subject. However, it is not limited thereto.

Although not illustrated, according to an embodiment, the electronic device 101 may obtain brightness data of surrounding environment of the electronic device 101 using an illuminance sensor (e.g., the illuminance sensor 273 of FIG. 2), independently of identifying the distance value 401 between an external object. The electronic device 101 may obtain other magnification information different from magnification information indicated by the table 400 of FIG. 4, using the distance value 401 obtained using a distance sensor (e.g., the distance sensor 271 of FIG. 2) and/or the brightness data. The electronic device 101 may obtain a plurality of images corresponding to the other magnification information using the distance value 401 and/or brightness data. However, it is not limited thereto. For example, the electronic device 101 may select magnification information 402 using at least one data among data obtained using a sensor (e.g., the sensor 270 of FIG. 2).

According to an embodiment, the electronic device 101 may identify a visual object indicating code information, using images based on each of magnifications corresponding to the distance and/or the brightness data. Hereinafter, an operation in which the electronic device 101 identifies a motion of an external object (e.g., the external object 310 of FIG. 3A ) using the images will be described in greater detail below with reference to FIG. 5.

As described above, according to an embodiment, the electronic device 101 may obtain magnification information corresponding to the distance information using distance information between the electronic device 101 and an external object (e.g., the external object 310 of FIG. 3A). The electronic device 101 may use a plurality of cameras to obtain images corresponding to the magnification information. The electronic device 101 may change at least a portion of frames obtained using the plurality of cameras to obtain the images. The electronic device 101 may obtain the images based on performing digital zoom on a specified area of the frames. The images may be images based on different FoVs and/or magnifications, respectively. The electronic device 101 may accurately identify code information included in each of the images, rather than using an image based on one FoV and/or magnification, by obtaining images based on respective different FoVs and/or magnifications using magnification information corresponding to the distance information.

FIG. 5 is a diagram illustrating an example operation in which an electronic device removes a frame based on identifying a specified motion, according to an embodiment. The electronic device 101 of FIG. 5 may include the electronic devices 101 of FIGS. 1 to 4. Referring to FIG. 5, a graph 500 indicating frames obtained by the electronic device 101 using at least one camera according to time (e.g., t in FIG. 5) is illustrated.

According to an embodiment, the electronic device 101 may obtain one or more frames using cameras (e.g., the cameras 210 in FIG. 2). The electronic device 101 may obtain the one or more frames based on each of FoVs corresponding to each of the cameras. The electronic device 101 may obtain the one or more frames using magnification information corresponding to distance information between the electronic device 101 and an external object (e.g., the external object 310 of FIG. 3A). A plurality of frames 501 and 502 may be an example of frames based on the same FoV (or magnification) among the one or more frames.

According to an embodiment, the electronic device 101 may identify motion of a visual object 510 included in the plurality of frames 501 and 502 based on execution of the motion identifier 231 of FIG. 2. For example, the electronic device 101 may identify the motion based on identifying coordinates 505-1, 505-2, and 505-3 of the visual object 510 included in each of the plurality of frames 501 and 502. The coordinates 505-1, 505-2, and 505-3 may refer to a position of at least one pixel included in each of the plurality of frames 501 and 502. The plurality of frames 501 and 502 may be referred to as a plurality of frame images 501 and 502 (or a plurality of image frames) in terms of including at least one pixel.

For example, the electronic device 101 may identify the first coordinate 505-1 of the visual object 510 included in the first subframe 501-1 (disuse frame) obtained at a first time point (e.g., t1). The electronic device 101 may identify the second coordinate 505-2 of the visual object 510 included in the second subframe 501-2 obtained at a second time point (e.g., t2). The electronic device 101 may identify a difference between the first coordinate 505-1 and the second coordinate 505-2. For example, the electronic device 101 may identify the difference between the first coordinate 505-1 and the second coordinate 505-2 by comparing each of coordinate values (e.g., x1, y1) included in the first coordinate 505-1 and each of coordinate values (e.g., x2, y2) included in the second coordinate 505-2. For example, the electronic device 101 may compare a first coordinate value (e.g., x1) of the first coordinate 505-1 and a first coordinate value (e.g., x2) of the second coordinate 505-2, and compare the second coordinate value (e.g., y1) of the first coordinate 505-1 and the second coordinate value (e.g., y2) of the second coordinate 505-2. When at least one of the first coordinate values and the second coordinate values is different, the electronic device 101 may identify a difference between the first coordinate value 505-1 and the second coordinate value 505-2. The electronic device 101 may identify motion of the visual object 510 based on identifying the difference between the first coordinate 505-1 and the second coordinate 505-2. For example, the electronic device 101 may identify the motion based on identifying the difference between the first coordinate 505-1 and the second coordinate 505-2 greater than or equal to a specified threshold. For example, the electronic device 101 may identify the motion of the visual object 510, based on obtaining motion data (e.g., motion field) corresponding to each of pixels included in the first subframe 501-1 and/or the second subframe 501-2. For example, the electronic device 101 may remove the first subframe 501-1 obtained at the first time point (e.g., t1), based on identifying the motion of the visual object 510. For example, the electronic device 101 may identify another frame for identifying code information corresponding to the visual object 510 by bypassing the first subframe 501-1.

According to an embodiment, the electronic device 101 may identify the motion of the visual object 510 using the second subframe 501-2 obtained at the second time point (e.g., t2) and the third subframe 501-3 obtained at the third time point (e.g., t3). For example, the electronic device 101 may identify the motion of the visual object 510 based on identifying a difference between the second coordinate 505-2 and the third coordinate 505-3. For example, the electronic device 101 may identify the motion based on identifying a difference between the second coordinate 505-2 and the third coordinate 505-3 greater than or equal to a specified threshold. Based on identifying the motion, the electronic device 101 may identify another frame by bypassing the second sub-frame 501-2.

According to an embodiment, the electronic device 101 may identify the coordinates 505-3 of the visual object 510, using the third subframe 501-3 obtained at the third time point (e.g., t3) and the second frame 502 obtained at the fourth time point (e.g., t4). For example, the electronic device 101 may identify that the coordinates 505-3 of the visual object 510 are maintained. For example, the electronic device 101 may identify consistency between data indicating a location of the visual object 510 in the third subframe 501-3 and data indicating a location of the visual object 510 in the second frame 502. For example, the electronic device 101 may identify that the coordinates 505-3 are maintained, based on obtaining a difference between a position of the visual object 510 in the third sub-frame 501-3 and a position of the visual object 510 in the second frame 502 less than a specified threshold.

According to an embodiment, the electronic device 101 may identify the second frame 502 by bypassing the first frames 501 based on identifying the motion of the visual object 510 included in each of the first frames 501. For example, the electronic device 101 may remove the first frames 501, based on identifying the motion of the visual object 510. The first frames 501 may be referred to as disuse frames 501 in terms of being removed. For example, the electronic device 101 may remove (or delete) data corresponding to the first frames 501, based on identifying the motion of the visual object 510. However, it is not limited thereto. For example, the electronic device 101 may bypass frames including motion blur based on identifying the motion blur within the frames. For example, the motion blur may be obtained based on the subject's motion while the electronic device 101 obtains at least one frame using a camera.

For example, the electronic device 101 may bypass frames including optical flow based on identifying the optical flow within frames. The optical flow may refer to a parameter indicating motion included in at least one pixel within a plurality of frames. For example, the electronic device 101 may identify the optical flow using a difference in pixels between the first frame and the second frame obtained continuously among the plurality of frames.

According to an embodiment, when the motion of the visual object 510 is not identified using the second frame 502, the electronic device 101 may identify code information corresponding to the visual object 510 based on execution of the code identifier 233 of FIG. 2. In terms of capable of identifying code information using the second frame 502, the second frame 502 may be referred to as a code identification frame. For example, the second frame 502 may be one or more. An operation of identifying code information by the electronic device 101 will be described in greater detail below with reference to FIG. 6.

Although not shown, the electronic device 101 may identify the motion of the electronic device 101 using data obtained from the acceleration sensor 275 of FIG. 2, independently of identifying the motion of the visual object 510 included in the plurality of frames 501 and 502. The electronic device 101 may remove data corresponding to frames obtained using cameras (e.g., the cameras 210 in FIG. 2), in a state in which the motion of the electronic device 101 is identified. However, it is not limited thereto. For example, the electronic device 101 may remove data corresponding to the frames based on identifying rotation of the electronic device 101 using a gyro sensor (not shown).

As described above, the electronic device 101 may remove at least one frame based on identifying the motion of the electronic device 101 and/or a motion of a subject (e.g., the visual object 510) included in the frames. The electronic device 101 may identify the subject by bypassing at least one removed frame and using a frame different from the at least one frame. The electronic device 101 may obtain another frame in which the motion of the electronic device 101 and/or the subject is maintained, by bypassing the frame indicating the motion of the electronic device 101 and/or the subject. The electronic device 101 may accurately identify information on a subject (e.g., the visual object 510) more than using a frame indicating motion, using the other frame.

An example of an operation in which the electronic device 101 identifies code information corresponding to the visual object 510 included in the second frame 502 will be described in greater detail below with reference to FIG. 6.

FIG. 6 is a diagram illustrating an example operation in which an electronic device identifies a visual object indicating a code, according to various embodiments. The electronic device 101 of FIG. 6 may include the electronic device 101 of FIGS. 1 to 5. Referring to FIG. 6, according to an embodiment, a state 600 in which the electronic device 101 identifies a code 605 using another camera while displaying the preview image 350 using at least one of the cameras (e.g., the cameras 210 of FIG. 2) is illustrated.

Referring to FIG. 6, according to an embodiment, the electronic device 101 may identify the code 605 using the second frame 502 while displaying the preview image 350 in the display 250. For example, in a state of displaying the preview image 350 using at least one camera (e.g., the cameras 210-1 of FIG. 2) among the cameras (e.g., the cameras 210 in FIG. 2), the electronic device 101 may obtain frames for identifying a code (e.g., the code 605) using another camera (e.g., camera 210-2 of FIG. 2). For example, the electronic device 101 may change frames based on a specified magnification corresponding to a distance value between the electronic device 101 and the external object 310, using data included in the table 400 of FIG. 4. For example, the electronic device 101 may perform digital zoom on each of the frames or crop at least a portion of each of the frames in order to change the frames. The electronic device 101 may obtain the second frame 502 among the frames, based on identifying a specified motion using the changed frames. For example, the electronic device 101 may obtain a second frame among a first frame (e.g., the first frames 501 of FIG. 5) capable of identifying a specific motion and a second frame 502 distinct from the first frame.

For example, the electronic device 101 may obtain the second frame 502 using a camera providing a specified magnification using data included in the table 400 of FIG. 4. The electronic device 101 may obtain the second frame 502 by performing digital zoom on at least a portion among the frames, in order to obtain the second frame 502 based on the specified magnification using the data. For example, when a distance value between the electronic device 101 and the external object 310 does not match the specified magnification, the electronic device 101 may obtain the second frame 502 having magnification matching with the distance value by performing digital zoom on at least a portion of the frames.

According to an embodiment, the electronic device 101 may identify the code 605 included in the second frame 502 using the second frame 502. For example, the electronic device 101 may identify a specific area in which the code 605 is displayed within the second frame 502.

For example, the electronic device 101 may remove (or delete) the second frame 502 and/or data corresponding to the second frame 502, in a case incapable of identifying the code 605 using the second frame 502. For example, based on removing the second frame 502 and/or the data, the electronic device 101 may identify a code using a frame different from the second frame 502 among frames obtained using the other camera (e.g., the camera 210-2 of FIG. 2). The electronic device 101 may obtain the other frame based on a sequence of frames obtained using the other camera.

According to an embodiment, the electronic device 101 may identify a type of the code 605 included in the second frame 502, based on execution of the code identifier 233 of FIG. 2. For example, the electronic device 101 may obtain information of the code 605 based on identifying the type of the code 605. For example, the type for the code 605 may include a code based on 1- dimension, a code based on 2-dimensions, and/or a symbol with a specified form (or pattern). However, it is not limited thereto.

For example, the electronic device 101 may execute a function indicated by the code 605 based on identifying the code 605. The electronic device 101 may display a visual object 610 in the display 250 to execute the function. The visual object 610 may include information on the code 605. For example, the visual object 610 may be referred to a pop-up window for indicating information on the code 605. The information on the code 605 may include information requesting that the electronic device 101 performs execution of at least one application or a specified operation. For example, the electronic device 101 may guide the user to execute the function using visual object 610. For example, the electronic device 101 may transmit or share information on the code 605 to an electronic device distinct from the electronic device 101 based on displaying the visual object 610. The electronic device 101 may initiate the execution of the function based on receiving a user's input using the visual object 610. The electronic device 101 may execute at least one application stored in the electronic device 101 or display information on the code 605. However, it is not limited to the above-described embodiments.

As described above, while displaying the preview image 350 in the display 250 using at least one camera among a plurality of cameras (e.g., the cameras 210 of FIG. 2), the electronic device 101 may obtain frames using a camera distinct from the at least one camera, independently of the change in the preview image 350. In a state of displaying the preview image 350, the electronic device 101 may identify a code from at least one of the frames, by removing or changing the frames based on specified data. The electronic device 101 may provide user convenience by identifying the code from at least one of the frames, independently of receiving a user input for identifying the code using the preview image 350.

FIG. 7 is a flowchart illustrating an example operation of an electronic device, according to an embodiment. At least a portion of operations of FIG. 7 may be performed by the electronic device 101 of FIG. 2 and/or the processor 120 of FIG. 2. Each operation of FIG. 7 may be performed sequentially, but is not necessarily performed sequentially. For example, a sequence of each operation may be changed, and at least two operations may be performed in parallel.

Referring to FIG. 7, according to an embodiment, in operation 710, the electronic device may display a preview image in the display based on at least a portion of first frames received from an image sensor. For example, while displaying the preview image 350 of FIG. 3A using at least one of cameras (e.g., the cameras 210 of FIG. 2), the electronic device may obtain the first frames including an external object (e.g., the external object 310 of FIG. 3A) including a code, using a camera different from the at least one camera.

Referring to FIG. 7, according to an embodiment, in operation 720, the electronic device may enlarge the first frames, based on data of a distance sensor in a state of displaying the preview image based on the first frames. The electronic device 101 may obtain magnification information based on the data. The electronic device 101 may enlarge the first frames using the obtained magnification information. The electronic device 101 may obtain second frames by changing the magnification information based on enlarging the first frames.

For example, the electronic device may obtain the magnification information using the data included in the table 400 of FIG. 4. The electronic device may change the obtained first frames using the magnification information. For example, the electronic device 101 may obtain the second frames based on enlarging a specified area (e.g., the area 351 of FIG. 3A) of the first frames.

Referring to FIG. 7, according to an embodiment, in operation 730, the electronic device may identify whether the motion of the visual object is identified, using pixels included in each of the second frames based on obtaining the second frames. The electronic device may identify the motion of the visual object using pixels included in each of the second frames, based on execution of the motion identifier 231 of FIG. 2. However, it is not limited thereto. The electronic device may identify the motion of the electronic device, using an acceleration sensor (e.g., the acceleration sensor 275 of FIG. 2). For example, in operation 740, the electronic device may remove at least one of the second frames, based on identifying the motion of the visual object (operation 730-YES). For example, the electronic device may remove a frame that identifies a motion among the second frames, based on identifying the motion of the visual object. For example, the electronic device may obtain another frame by bypassing at least one of the second frames, based on identifying the motion of the visual object. For example, the electronic device may perform operation 730 based on obtaining the other frame.

Referring to FIG. 7, according to an embodiment, when the motion of the visual object is not identified (operation 730-NO), in operation 750, the electronic device may identify whether a visual object corresponding to the code is identified from at least one of the second frames. For example, the electronic device may identify a visual object corresponding to the code 605 of FIG. 6 as a visual object corresponding to the code using at least one of the second frames (e.g., the second frame 502 of FIG. 6). For example, when the visual object is not identified (operation 750-NO), the electronic device may perform operation 720.

Referring to FIG. 7, according to an embodiment, when a visual object corresponding to a code is identified (operation 750-YES), in operation 760, the electronic device may perform a function indicated by the visual object. For example, the electronic device may display at least one visual object (e.g., the visual object 610 of FIG. 6) to perform the function. The electronic device may guide a user to perform the function based on displaying the at least one visual object. In order to perform the function, the electronic device may initiate execution of at least one application stored in a memory (e.g., the memory 130 of FIG. 2) or display data indicated by the visual object on the display.

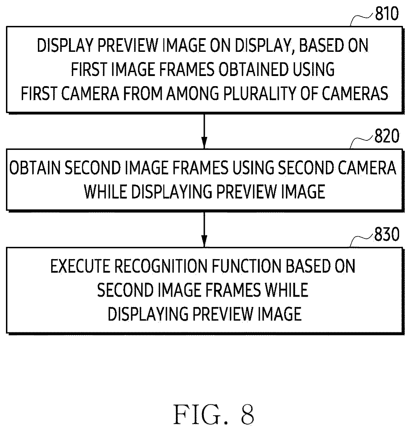

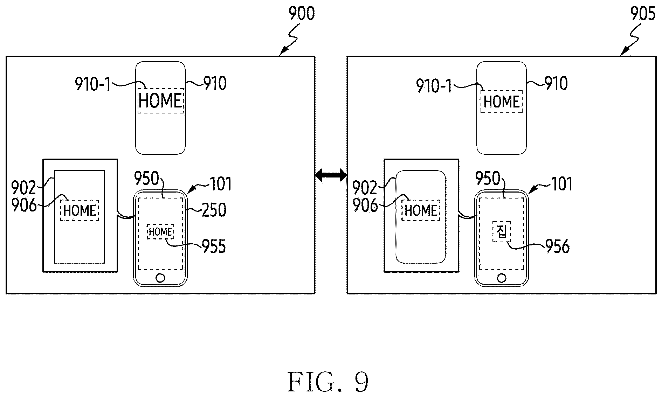

FIG. 8 is a diagram illustrating an exemplary flowchart indicating an operation of an electronic device according to an embodiment. At least one of operations of FIG. 8 may be performed by the electronic device 101 of FIG. 2. At least one of the operations of FIG. 8 may be controlled by the processor 120 of FIG. 2. Each of the operations of FIG. 8 may be performed sequentially, but is not necessarily performed sequentially. For example, order of each of the operations may be changed, and at least two operations may be performed in parallel. The at least one of the operations of FIG. 8 may be related to at least one of the operations of FIG. 7. FIG. 9 is a diagram illustrating an example of an operation of identifying text by an electronic device according to an embodiment. The electronic device 101 of FIG. 9 may include the electronic device 101 of FIG. 1.

Referring to FIG. 8, according to an embodiment, in operation 810, the electronic device may display a preview image on a display, based on first image frames obtained using a first camera from among a plurality of cameras. The plurality of cameras may include a first camera supporting a first magnification and a second camera supporting a second magnification higher than the first magnification. The plurality of cameras may include the second camera facing in a same direction as the first camera. Since each of the plurality of cameras faces the same direction, each of image frames obtained using each of the plurality of cameras may indicate at least a portion of same external environment. The at least a portion of the external environment corresponding to each of the image frames may be different according to a magnification supported by each of the plurality of cameras that obtained each of the image frames.

Referring to FIG. 9, according to an embodiment, in state 900, the electronic device 101 may display a preview image 950 on a display 250 using a camera (e.g., the camera 210-1 of FIG. 2) among a plurality of cameras (e.g., the camera 210 of FIG. 2). The camera may include a camera set as default to obtain a preview image. For example, the electronic device 101 may display the preview image 950 on the display 250, based on at least a portion of first image frames obtained using the camera.

For example, the electronic device 101 may determine whether a recognizable object 910 (or an external object) is included in at least a portion of the first image frames, based on displaying the preview image 950. The object 910 identifiable (or recognizable) by the electronic device 101 may include text 910-1 and/or a QR code. The QR code may include an identification symbol, identification information, a computer (or machine) readable symbol, a data code label, a universal product code (UPC), a printed code, a printed pattern, and/or a planar code. The object 910 may further include an identifiable image. However, it is not limited thereto.

For example, the electronic device 101 may determine whether the recognizable object 910 is included using the preview image 950, when information corresponding to the object 910 is not obtained (or identified) based on recognition (or a recognition function) of the object. In case that information on text 955 is not be obtained due to the small size of the object 910 even when it is possible to identify that the preview image 950 includes the object 910, the electronic device may determine that the recognizable object 910 is included in the preview image 950. According to an embodiment, when the preview image 950 not including the object 910 is obtained, the electronic device 101 may at least temporarily cease obtaining second image frames 902.

Referring to FIG. 8, according to an embodiment, in operation 820, the electronic device may obtain the second image frames using the second camera while displaying the preview image. The second camera may include a camera that supports a higher magnification than the first camera. Since the second camera supports the higher magnification than the first camera, the second camera may obtain second image frames including the object having size larger than size of an object in the first image frames obtained using the first camera. According to an embodiment, when the object 910 is not identified in the preview image 950, the electronic device 101 may at least temporarily cease obtaining the second image frames 902.

Referring to FIG. 8, according to an embodiment, in operation 830, the electronic device may execute a recognition function based on the second image frames while displaying the preview image. The electronic device may obtain information corresponding to the object included in the second image frames based on execution of the recognition function. The recognition function may be executed to recognize a QR code and/or text based on the second image frames while displaying the preview image.

Referring to FIG. 9, according to an embodiment, the electronic device 101 may obtain the second image frames 902 using the second camera distinguished from the first camera obtaining the preview image 950. The electronic device 101 may execute a recognition function based on the second image frames 902 while displaying the preview image 950. The electronic device 101 may perform the recognition function based on the second image frames 902 in background, while displaying the preview image 950 on the display 250. The electronic device 101 may improve a performance of the recognition function by performing the recognition function based on the second image frames 902 including an object having size larger than size of an object included in the first image frames corresponding to the preview image 950.

According to an embodiment, in state 905, the electronic device 101 may identify text 906 by performing the recognition function based on the second image frames 902. The electronic device may display a visual object 956 according to the execution of the recognition function, based on a position of the text 906 maintained within at least a portion of the second image frames 902. The electronic device 101 may further display the visual object 956 together with the preview image 950 maintained on the display 250, based on identifying the text 906. For example, the electronic device 101 may display the visual object 956 having size corresponding to size of an object (e.g., the text 955) in order to cover the object (e.g., the text 955) viewed in the preview image, based on the recognition function for the object 910 executed based on the second image frames 902. The visual object 956 may include text. The text included in the visual object 956 may include word (e.g., a word in a different language type) that have a substantially similar meaning to the text 910-1 identified based on the recognition function. For example, the electronic device 101 may display a visual object including text corresponding to the text 910-1, by overlapping at least a portion of the preview image 950. Text corresponding to the text 910-1 may be obtained based on recognition of the object 910. The visual object may be displayed based on a shape of a pop-up window. In a perspective capable of recognizing the text, the recognition function may include an optical character recognition (OCR) function.

According to an embodiment, the object 910 recognizable through the preview image 950 may include text and/or a QR code. When identifying an object (e.g., the QR code) using the second image frames 902, the electronic device 101 may display an executable object (e.g., the visual object 610 in FIG. 6) for executing a function corresponding to the object (e.g., the QR code) on the display 250. The electronic device 101 may display a visual object along a periphery of the object (e.g., the QR code) viewed in the preview image 950, together with the executable object. The electronic device 101 may display the visual object along the periphery of the object (e.g., QR code) to guide a position of the object (e.g., QR code) to a user. The visual object may be highlighted and displayed along the periphery of the object (e.g., the QR code).

For example, the electronic device 101 may obtain the preview image 950 and the second image frames 902 by using a plurality of cameras facing a same direction. Since the preview images 950 and the second image frames 902 are obtained by using the plurality of cameras facing the same direction, when an object included in the second image frames 902 is identified, the electronic device 101 may infer a position of the object included in the preview image 950. Based on the inferred position, the electronic device 101 may highlight and display the visual object along the periphery of the object (e.g., the QR code).

According to an embodiment, the electronic device 101 may obtain a distance to the object 910 by using a sensor. The electronic device 101 may determine a camera mapped to the distance, based on obtaining the distance. For example, the electronic device 101 may obtain information on the distance from the object 910 viewed in the preview image 950 displayed on the display 250, by using the sensor. The electronic device 101 may determine changing from a first camera (e.g., a camera for obtaining a preview image) set as a camera for recognizing the object 910 to a second camera, based at least in part on the distance. For example, the electronic device 101 may select a second magnification related to a candidate distance corresponding to the distance, by using magnifications available through a plurality of cameras and reference data on relation between candidate distances (e.g., table 400 in FIG. 4). The electronic device 101 may obtain the second image frames 902 based on the second magnification, by using the second camera. For example, when the first camera is a telephoto camera having a first magnification, the second camera may be a telephoto camera having a second magnification higher than the first magnification. For example, when the first camera is a wide-angle camera, the second camera may be a telephoto camera having a field of view (FoV) narrower than the wide-angle camera.

According to an embodiment, the electronic device 101 may receive an input (e.g., a photographing input and/or a shooting input) for obtaining the preview image 950, while displaying the preview image 950. The electronic device 101 may obtain at least one of the first image frames corresponding to the preview image 950 in response to the input. The electronic device 101 may obtain at least one of the second image frames 902 together, in response to obtaining at least one of the first image frames. The electronic device may obtain at least one of the second image frames 902 in conjunction with at least one of the first image frames. The electronic device 101 may store at least one of the second image frames 902 together with metadata related to at least one of the first image frames. When displaying at least one of the first image frames on the display, the electronic device 101 may display at least one of the second image frames 902 on at least a portion of the display based on the metadata. Since at least one of the first image frames is stored together with at least one of the second image frames 902, the electronic device 101 may perform object recognition on at least one of the first image frames by using at least one of the second image frames 902. For example, the electronic device 101 may display at least one of the second image frames 902 in response to an input of selecting an object included in at least one of the first image frames. However, it is not limited thereto.

As described above, according to an embodiment, the electronic device 101 may obtain image frames (e.g., the second image frames 902) for recognizing an object using another camera distinguished from the camera that obtains the preview image 950, based on a determination that the preview image 950 includes an object to be recognized, without user input for changing (or magnifying) the preview image 950. The electronic device 101 may provide information on the object to the user by performing object recognition using at least a portion of the image frames.

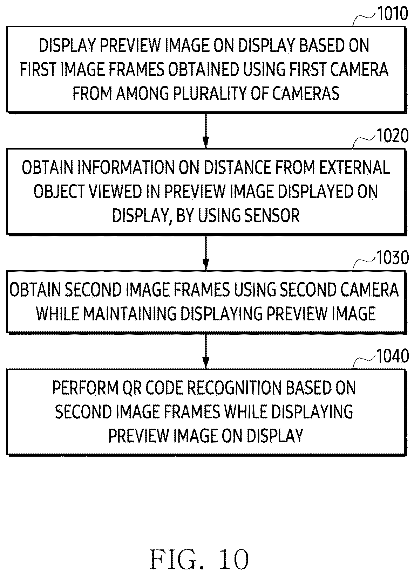

FIG. 10 is a diagram illustrating an exemplary flowchart indicating an operation of an electronic device according to an embodiment. The electronic device of FIG. 10 may include the electronic device 101 of FIG. 2. At least one of operations of FIG. 10 may be performed by the electronic device 101 of FIG. 2. At least one of the operations of FIG. 10 may be controlled by the processor 120 of FIG. 2. Each of the operations of FIG. 10 may be performed sequentially, but is not necessarily performed sequentially. For example, order of each of the operations may be changed, and at least two operations may be performed in parallel. At least one of the operations of FIG. 10 may be related to at least one of the operations of FIG. 8.

Referring to FIG. 10, according to an embodiment, in operation 1010, the electronic device may display a preview image on a display based on first image frames obtained using a first camera from among a plurality of cameras. The preview image may include an external object recognizable by the processor.

Referring to FIG. 10, according to an embodiment, in operation 1020, the electronic device may obtain information on a distance from an external object viewed in the preview image displayed on the display, by using a sensor (e.g., a distance sensor). The electronic device may obtain information on the distance in response to receiving a designated input (e.g., a zoom-out input) for the preview image. The sensor may face in a same direction as a direction in which the first camera faces. The designated input may include an input for magnifying the preview image. For example, the electronic device may identify that movement of the electronic device is at least temporarily ceased based on data obtained from a sensor (e.g., an acceleration sensor). The electronic device may obtain information on the distance after the movement is at least temporarily ceased.

Referring to FIG. 10, according to an embodiment, in operation 1030, the electronic device may obtain second image frames using the second camera while maintaining displaying the preview image. For example, the second camera may have a FoV narrower than the first camera. For example, the second camera may support a second magnification higher than the first camera supporting the first magnification. The second camera may be disposed toward a same direction as a direction in which the first camera faces.

For example, the electronic device may determine changing a camera for recognizing the QR code from the first camera to the second camera, based on at least a portion of a distance. The electronic device may obtain second image frames using the second camera based on the determination.

Referring to FIG. 10, according to an embodiment, in operation 1040, the electronic device may perform QR code recognition based on the second image frames while displaying the preview image on the display. The electronic device may perform the QR code recognition using the second image frames without receiving an input for magnifying the preview image, while displaying the preview image.

For example, the electronic device may display a visual object together with the preview image maintained on the display in response to success of the QR code recognition. The visual object may be displayed along a periphery of the recognized QR code (or a position of the QR code) on an external object viewed in the preview image. For example, the electronic device may display an executable object for executing a function provided by the QR code together with the visual object.

For example, the electronic device may obtain third image frames by magnifying at least a portion of the first image frames obtained using the first camera, based on a determination of maintaining the camera for the recognition of the QR code as the first camera based on the at least in part on the distance obtained through the sensor. The at least portion may include a center area of the first image frames. At least a portion of the center area may include an external object. The electronic device may bypass obtaining the second image frames and perform the QR code recognition based on the obtained third image frames.

According to an embodiment, the electronic device may identify an external object indicating code information in frames obtained using a plurality of cameras. The electronic device may identify an external object indicating code information using another camera, while displaying a preview image in the display using one of the plurality of cameras. The electronic device may be required a method for obtaining magnification information corresponding to distance information between the electronic device and the external object for identifying the visual object using another camera.

As described above, according to an example embodiment, an electronic device may comprises an image sensor, a distance sensor, a display, and a processor. The processor may be configured to display a preview image in the display based on at least a portion of first frames received from the image sensor. The processor may be configured to obtain second frames by enlarging the first frames using magnification information selected based on data of the distance sensor, in a state in which the preview image is displayed based on the first frames. The processor may be configured to execute a function indicated by a visual object on the preview image, based on identifying the visual object corresponding to a code from at least one of the second frames.

For example, the processor may be configured to identify motion of the visual object using pixels included in each of the second frames, based on obtaining the second frames. The processor may be configured to remove at least one of the second frames based on identifying the motion of the visual object.

For example, the electronic device may further comprise an acceleration sensor. The processor may be configured to identify motion of the electronic device using motion data obtained from the acceleration sensor. The processor may be configured to remove the at least one of the second frames based on identifying the motion of the electronic device.

For example, the processor may be configured to cease at least temporarily obtaining the second frames in response to an input for obtaining the preview image.

For example, the electronic device may further comprise an illuminance sensor. The processor may be configured to obtain the second frames using brightness data received from the illuminance sensor.

For example, the electronic device may further comprise one or more cameras including at least one of the image sensor or the distance sensor. The processor may be configured to obtain the first frames based on a field-of-view (FoV) of each of the one or more cameras, using all of the one or more cameras.

For example, the processor may be configured to obtain the second frames based on a different FoV different from the first frames based on the FoV of each of the one or more cameras.

For example, the processor may be configured to initiate execution of at least one application based on executing the function.

For example, the processor may be configured to obtain the second frames by enlarging a specified area of the first frames.

For example, the processor may be configured to obtain the data of the distance sensor using the specified area of the first frames, based on the distance sensor.

As described above, according to an example embodiment, a method of operating an electronic device may comprise displaying a preview image in a display based on at least a portion of first frames received from an image sensor. The method may comprise obtaining second frames by enlarging the first frames using magnification information selected based on data of a distance sensor, in a state in which the preview image is displayed based on the first frames. The method may comprise executing a function indicated by a visual object on the preview image, based on identifying the visual object corresponding to a code from at least one of the second frames.

For example, the obtaining second frames may comprise identifying motion of the visual object using pixels included in each of the second frames, based on obtaining the second frames. The obtaining second frames may comprise removing at least one of the second frames based on identifying the motion of the visual object.

For example, the obtaining second frames may comprise identifying motion of the electronic device using motion data obtained from an acceleration sensor. The obtaining second frames may comprise removing the at least one of the second frames based on identifying the motion of the electronic device.

For example, the obtaining second frames may comprise at least temporarily ceasing obtaining the second frames in response to an input for obtaining the preview image.

For example, the obtaining second frames may comprise obtaining the second frames using brightness data received from an illuminance sensor.

For example, the obtaining second frames may comprise obtaining the first frames based on a field-of-view (FoV) of each of the one or more cameras, using all of one or more cameras including at least one of the image sensor or the distance sensor.

For example, the obtaining second frames may comprise obtaining the second frames based on a different FoV different from the first frames based on the FoV of each of the one or more cameras.

For example, the obtaining second frames may comprise initiating execution of at least one application based on executing the function.

For example, the obtaining second frames may comprise obtaining the second frames by enlarging a specified area of the first frames.

As described above, according to an example embodiment, a non-transitory computer readable storage medium storing one or more programs, the one or more programs, when are executed by a processor of an electronic device, may cause the electronic device to control a display to display a preview image based on at least a portion of first frames received from an image sensor; obtain second frames by enlarging the first frames using magnification information selected based on data of a distance sensor, in a state in which the preview image is displayed based on the first frames; execute a function indicated by a visual object on the preview image, based on identifying the visual object corresponding to a code from at least one of the second frames.

For example, the one or more programs, when executed by the processor of the electronic device, may cause the electronic device to identify motion of the visual object using pixels included in each of the second frames, based on obtaining the second frames. The one or more programs, when executed by the processor of the electronic device, may cause the electronic device to remove at least one of the second frames based on identifying the motion of the visual object.

For example, the one or more programs, when executed by the processor of the electronic device, may cause the electronic device to identify motion of the electronic device using motion data obtained from the acceleration sensor. The one or more programs, when executed by the processor of the electronic device, may cause the electronic device to remove the at least one of the second frames based on identifying the motion of the electronic device.

For example, the one or more programs, when executed by the processor of the electronic device, may cause the electronic device to cease at least temporarily obtaining the second frames in response to an input for obtaining the preview image.

For example, the one or more programs, when executed by the processor of the electronic device, may cause the electronic device to obtain the second frames using brightness data received from the illuminance sensor.

For example, the one or more programs, when executed by the processor of the electronic device, may cause the electronic device to initiate execution of at least one application based on executing the function.

As described above, according to an embodiment, an electronic device may comprise a plurality of cameras including a first camera and a second camera facing in a same direction as the first camera, a display, a processor, and memory for storing instructions that, when executed by the processor, cause the electronic device to display, on the display, a preview image, based on first image frames obtained using the first camera from among the plurality of cameras. The electronic device may comprise memory for storing instructions that, when executed by the processor, cause the electronic device to, while displaying the preview image based on the first image frames obtained using the first camera from among the plurality of cameras, obtain second image frames using the second camera, based at least in part on determining that a portion of the first image frames includes an object to be recognized. The electronic device may comprise memory for storing instructions that, when executed by the processor, cause the electronic device to execute a recognition function based on the second image frames obtained using the second camera while displaying the preview image on the display, based at least in part on determining that a portion of the first image frames includes an object to be recognized.

For example, the electronic device may comprise a sensor facing in a same direction as the first camera and the second camera. The instructions, when executed by the processor, may cause the electronic device to obtain, using the sensor, information regarding a distance from the object viewed in the preview image being displayed on the display. The instructions, when executed by the processor, may cause the electronic device to determine, based at least in part on the distance, changing the first camera set as a camera for the recognition function of the object to the second camera. The instructions, when executed by the processor, may cause the electronic device to obtain the second image frames using the second camera, based on the determination.

For example, the first camera may correspond to a telephoto camera supporting a first magnification. The second camera may correspond to a telephoto camera supporting a second magnification higher than the first magnification. The instructions, when executed by the processor, may cause the electronic device to select, by using reference data regarding relation between candidate distances and magnifications available through the plurality of cameras, the second magnification related to a candidate distance corresponding to the distance. The instructions, when executed by the processor, may cause the electronic device to change the first camera to the second camera supporting the second magnification.

The instructions, when executed by the processor, may cause the electronic device to execute the recognition function based on the second image frames, when obtaining the first image frames including the object using the first camera, based on a position of the object maintained in the at least portion of the second image frames. The instructions, when executed by the processor, may cause the electronic device to cease at least temporarily obtaining the second image frames using the second camera, when obtaining the first image frames that do not include the object using the first camera.

For example, the first camera may correspond to a wide-angle camera. The second camera may correspond to a telephoto camera having a narrower field of view than the wide-angle camera. The recognition function is executed to recognize a quick response (QR) code based on the second image frames obtained using the telephoto camera while the wide-angle camera is used to obtain the first image frames for display the preview image. The instructions, when executed by the processor, may cause the electronic device to display a visual object in relation to a portion of the preview image corresponding to the QR code, based on execution of the recognition function of the object corresponding to a QR code.

For example, the instructions, when executed by the processor, may cause the electronic device to display, with the visual object, an executable object for executing a function corresponding to the object. The visual object may be displayed along a periphery of the object located in the portion of the preview image.

For example, the recognition function is executed to recognize a text based on the second image frames obtained using the second camera while the first camera is used to obtain the first image frames for display the preview image. The instructions, when executed by the processor, cause the electronic device to display a visual object with size corresponding to size of the object, in order to mask the object viewed in the preview image, based on execution of the recognition function of the object corresponding to a text.

For example, the instructions, when executed by the processor, may cause the electronic device to receive an input for obtaining the preview image, while displaying the preview image based on the first image frames obtained using the first camera. The instructions, when executed by the processor, may cause the electronic device to obtain at least portion of the first image frames corresponding to the preview image and at least portion of the second image frames in conjunction with the at least portion of the first image frames, based on the input. The instructions, when executed by the processor, may cause the electronic device to store the at least portion of the second image frames with metadata related to the at least portion of the first image frames.

For example, the instructions, when executed by the processor, may cause the electronic device to display the at least one of the first image frames. The instructions, when executed by the processor, may cause the electronic device to receive another input for the object included in the at least one of the first image frames. The instructions, when executed by the processor, may cause the electronic device to display the at least one of the second image frames including the object having size larger than size of the object included in the at least one of the first image frame, based on the metadata related to the at least one of the first image frames.

As described above, according to an embodiment, a method of an electronic device including a plurality of cameras including a first camera and a second camera facing in a same direction as the first camera, and a display may comprise displaying, on the display, a preview image, based on first image frames obtained using the first camera from among the plurality of cameras. The method may comprise, while displaying the preview image based on the first image frames obtained using the first camera from among the plurality of cameras, obtaining second image frames using the second camera, based at least in part on determining that a portion of the first image frames includes an object to be recognized. The method may comprise, based at least in part on determining that a portion of the first image frames includes an object to be recognized, executing a recognition function based on second image frames obtained using the second camera while displaying the preview image on the display.

For example, the method may comprise obtaining, using a sensor facing a same direction as the first camera and the second camera, information regarding a distance from the object viewed in the preview image being displayed on the display. The method may comprise determining, based at least in part on the distance, changing the first camera set as a camera for the recognition function of the object to the second camera. The method may comprise, based on the determination, obtaining the second image frames using the second camera.

For example, the first camera may correspond to a telephoto camera supporting a first magnification. The second camera may correspond to a telephoto camera supporting a second magnification higher than the first magnification. The method may comprise selecting, by using reference data regarding relation between candidate distances and magnifications available through the plurality of cameras, the second magnification related to a candidate distance corresponding to the distance. The method may comprise changing the first camera to the second camera supporting the second magnification.

The method may comprise executing the recognition function based on the second image frames, when obtaining the first image frames including the object using the first camera, based on a position of the object maintained in the at least portion of the second image frames. The method may comprise at least temporarily ceasing obtaining the second image frames using the second camera, when obtaining the first image frames that do not include the object using the first camera.

For example, the first camera may correspond to a wide-angle camera. The second camera may correspond to a telephoto camera having a narrower field of view than the wide-angle camera. The recognition function is executed to recognize a quick response (QR) code based on the second image frames obtained using the telephoto camera while the wide-angle camera is used to obtain the first image frames for display the preview image. The method comprise displaying a visual object in relation to a portion of the preview image corresponding to the QR code, based on execution of the recognition function of the object corresponding to a QR code.

For example, the method may comprise displaying, with the visual object, an executable object for executing a function corresponding to the object. The visual object may be displayed along a periphery of the object located in the portion of the preview image.

As described above, according to an embodiment, an electronic device may comprise a plurality of cameras including a first camera and a second camera facing in a same direction as the first camera, a sensor facing in a same direction as the first camera and the second camera, a display, a processor. The electronic device may comprise memory for storing instructions that, when executed by the processor, cause the electronic device to display, on the display, a preview image, based on first image frames obtained using the first camera from among the plurality of cameras. The electronic device may comprise memory for storing instructions that, when executed by the processor, cause the electronic device to obtain, by using the sensor, information regarding a distance from an external object viewed in the preview image being displayed on the display. The electronic device may comprise memory for storing instructions that, when executed by the processor, cause the electronic device to obtain second image frames using the second camera, based at least in part on the distance, while maintaining displaying the preview image based on first image frames obtained using the first camera from among the plurality of cameras. The electronic device may comprise memory for storing instructions that, when executed by the processor, cause the electronic device to execute a recognition of quick response (QR) code based on the second image frames while displaying the preview image on the display.

For example, the instructions, when executed by the processor, may cause the electronic device to determine, based the at least in part on the distance, changing a camera for a recognition of the QR code from the first camera to the second camera. The instructions, when executed by the processor, may cause the electronic device to obtain the second image frames using the second camera, based on the determination.

For example, the instructions, when executed by the processor, may cause the electronic device to obtain third image frames by magnifying the first image frames obtained using the first camera that is maintained as the camera for the recognition of the QR code, while displaying the preview image, based at least in part on determining, based on the distance, the camera for the recognition of the QR code being maintained as the first camera. The instructions, when executed by the processor, may cause the electronic device to execute the recognition of the QR code based on at least portion of the third image frames, based at least in part on determining, based on the distance, the camera for the recognition of the QR code being maintained as the first camera.

For example, the instructions, when executed by the processor, may cause the electronic device to display a visual object with the preview image being maintained on the display, in response to success of the recognition of the QR code.

For example, the visual object may be displayed along a periphery of the recognized QR code position on the external object viewed in the preview image.

The apparatus described above may be implemented as a combination of hardware components, software components, and/or hardware components and software components. For example, the devices and components described in the embodiments may be implemented using one or more general purpose computers or special purpose computers such as processors, controllers, arithmetical logic unit (ALU), digital signal processor, microcomputers, field programmable gate array (FPGA), PLU(programmable logic unit), microprocessor, any other device capable of executing and responding to instructions. The processing device may perform an operating system OS and one or more software applications performed on the operating system. In addition, the processing device may access, store, manipulate, process, and generate data in response to execution of the software. For convenience of understanding, although one processing device may be described as being used, a person skilled in the art may see that the processing device may include a plurality of processing elements and/or a plurality of types of processing elements. For example, the processing device may include a plurality of processors or one processor and one controller. In addition, other processing configurations, such as a parallel processor, are also possible.

The software may include a computer program, code, instruction, or a combination of one or more of them and configure the processing device to operate as desired or command the processing device independently or in combination. Software and/or data may be embodied in any type of machine, component, physical device, computer storage medium, or device to be interpreted by a processing device or to provide instructions or data to the processing device. The software may be distributed on a networked computer system and stored or executed in a distributed manner. Software and data may be stored in one or more computer-readable recording media.

The method according to the embodiment may be implemented in the form of program instructions that may be performed through various computer means and recorded in a computer-readable medium. In this case, the medium may continuously store a computer-executable program or temporarily store the program for execution or download. In addition, the medium may be a variety of recording means or storage means in which a single or several hardware are combined and is not limited to media directly connected to any computer system and may be distributed on the network. Examples of media may include magnetic media such as hard disks, floppy disks and magnetic tapes, optical recording media such as CD-ROMs and DVDs, magneto-optical media such as floppy disks, ROMs, RAMs, flash memories, and the like to store program instructions. Examples of other media include app stores that distribute applications, sites that supply or distribute various software, and recording media or storage media managed by servers.

Although embodiments have been described according to various example embodiments and drawings as above, various modifications are possible from the above description to those of ordinary skill in the art. For example, even if the described techniques are performed in a different order from the described method, and/or components such as the described system, structure, device, circuit, etc. are combined or combined in a different form from the described method or are substituted or substituted by other components or equivalents, appropriate results may be achieved.

Therefore, other implementations, other embodiments, and equivalents to the claims fall within the scope of the disclosure, including the appended claims and their equivalents. It will also be understood that any of the embodiment(s) described herein may be used in conjunction with any other embodiment(s) described herein.

## Claims

1. An electronic device, comprising:
a plurality of cameras including a first camera and a second camera facing in a same direction as the first camera;
a display;
a processor; and
memory for storing instructions that, when executed by the processor, cause the electronic device to:
display, on the display, a preview image, based on first image frames obtained using the first camera from among the plurality of cameras, and
based at least in part on determining that a portion of the first image frames includes an object to be recognized:
while displaying the preview image based on the first image frames obtained using the first camera from among the plurality of cameras, obtain second image frames using the second camera, and execute a recognition function based on the second image frames obtained using the second camera.

2. The electronic device of claim 1, comprising:
a sensor facing in a same direction as the first camera and the second camera;
wherein the instructions, when executed by the processor, cause the electronic device to:
obtain, using the sensor, information regarding a distance from the object viewed in the preview image being displayed on the display,
determine, based at least in part on the distance, changing the first camera set as a camera for the recognition function of the object to the second camera, and
based on the determination, obtain the second image frames using the second camera.

3. The electronic device of claim 2,
wherein the first camera corresponds to a telephoto camera supporting a first magnification and the second camera corresponds to a telephoto camera supporting a second magnification higher than the first magnification, and
wherein the instructions, when executed by the processor, cause the electronic device to:
select, by using reference data regarding relation between candidate distances and magnifications available through the plurality of cameras, the second magnification related to a candidate distance corresponding to the distance, and
change the first camera to the second camera supporting the second magnification.

4. The electronic device of claim 1,
wherein the instructions, when executed by the processor, cause the electronic device to:
when obtaining the first image frames including the object using the first camera, based on a position of the object maintained in the at least portion of the second image frames, execute the recognition function based on the second image frames, and
when obtaining the first image frames that do not include the object using the first camera, at least temporarily cease obtaining the second image frames using the second camera.

5. The electronic device of claim 1,
wherein the first camera corresponds to a wide-angle camera and the second camera corresponds to a telephoto camera having a narrower field of view than the wide-angle camera,
wherein the recognition function is executed to recognize a quick response (QR) code based on the second image frames obtained using the telephoto camera while the wide-angle camera is used to obtain the first image frames for display the preview image,
wherein the instructions, when executed by the processor, cause the electronic device to:
based on execution of the recognition function of the object corresponding to a QR code, display a visual object in relation to a portion of the preview image corresponding to the QR code.

6. The electronic device of claim 5,
wherein the instructions, when executed by the processor, cause the electronic device to display, with the visual object, an executable object for executing a function corresponding to the object, and
wherein the visual object is displayed along a periphery of the object located in the portion of the preview image.

7. The electronic device of claim 1,
wherein the recognition function is executed to recognize a text based on the second image frames obtained using the second camera while the first camera is used to obtain the first image frames for display the preview image,
wherein the instructions, when executed by the processor, cause the electronic device to:
based on execution of the recognition function of the object corresponding to a text, display a visual object with size corresponding to size of the object, in order to mask the object viewed in the preview image.

8. The electronic device of claim 1,
wherein the instructions, when executed by the processor, cause the electronic device to:
receive an input for obtaining the preview image, while displaying the preview image based on the first image frames obtained using the first camera,
based on the input, obtain at least portion of the first image frames corresponding to the preview image and at least portion of the second image frames in conjunction with the at least portion of the first image frames, and
store the at least portion of the second image frames with metadata related to the at least portion of the first image frames.

9. The electronic device of claim 1,
wherein the instructions, when executed by the processor, cause the electronic device to:
display the at least one of the first image frames,
receive another input for the object included in the at least one of the first image frames, and
display the at least one of the second image frames including the object having size larger than size of the object included in the at least one of the first image frame, based on the metadata related to the at least one of the first image frames.

10. A method of an electronic device including a plurality of cameras including a first camera and a second camera facing in a same direction as the first camera, and a display, comprising:
displaying, on the display, a preview image, based on first image frames obtained using the first camera from among the plurality of cameras, and
based at least in part on determining that a portion of the first image frames includes an object to be recognized:
while displaying the preview image based on the first image frames obtained using the first camera from among the plurality of cameras, obtaining second image frames using the second camera; and
executing a recognition function based on second image frames obtained using the second camera while displaying the preview image on the display.

11. The method of claim 10, comprising:
obtaining, using a sensor facing a same direction as the first camera and the second camera, information regarding a distance from the object viewed in the preview image being displayed on the display,
determining, based at least in part on the distance, changing the first camera set as a camera for the recognition function of the object to the second camera, and
based on the determination, obtaining the second image frames using the second camera.

12. The method of claim 11,
wherein the first camera corresponds to a telephoto camera supporting a first magnification and the second camera corresponds to a telephoto camera supporting a second magnification higher than the first magnification, and
wherein the method comprising:
selecting, by using reference data regarding relation between candidate distances and magnifications available through the plurality of cameras, the second magnification related to a candidate distance corresponding to the distance, and
changing the first camera to the second camera supporting the second magnification.

13. The method of claim 10, comprising:
when obtaining the first image frames including the object using the first camera, based on a position of the object maintained in the at least portion of the second image frames, executing the recognition function based on the second image frames, and
when obtaining the first image frames that do not include the object using the first camera, at least temporarily ceasing obtaining the second image frames using the second camera.

14. The method of claim 10,
wherein the first camera corresponds to a wide-angle camera and the second camera corresponds to a telephoto camera having a narrower field of view than the wide-angle camera,
wherein the recognition function is executed to recognize a quick response (QR) code based on the second image frames obtained using the telephoto camera while obtaining the first image frames for display the preview image using the wide-angle camera, and
wherein the method comprising:
based on execution of the recognition function of the object corresponding to a QR code, displaying a visual object in relation to a portion of the preview image corresponding to the QR code.

15. The method of claim 14, comprising:
displaying, with the visual object, an executable object for executing a function corresponding to the object, and
wherein the visual object is displayed along a periphery of the object located in the portion of the preview image.
